(19) Europäisches Patentamt / European Patent Office / Office européen des brevets

(11) **EP 3 491 222 B1**

(12) **FASCICULE DE BREVET EUROPEEN**

(45) Date de publication et mention de la délivrance du brevet:
**13.05.2020 Bulletin 2020/20**

(21) Numéro de dépôt: **17742504.8**

(22) Date de dépôt: **07.07.2017**

(51) Int Cl.:
*F01N 3/20* *(2006.01)*  *F01N 3/035* *(2006.01)*
*F01N 13/00* *(2010.01)*  *F02D 41/02* *(2006.01)*
*F02D 41/14* *(2006.01)*

(86) Numéro de dépôt international:
**PCT/FR2017/051856**

(87) Numéro de publication internationale:
**WO 2018/024955 (08.02.2018 Gazette 2018/06)**

(54) **PROCÉDÉ DE RÉGULATION DE LA QUANTITÉ DE CRISTAUX D'URÉE PRÉSENTS DANS UNE LIGNE D'ÉCHAPPEMENT DE MOTEUR À COMBUSTION INTERNE COMPRENANT UN CATALYSEUR SCR**

VERFAHREN ZUR STEUERUNG DER MENGE VON HARNSTOFFKRISTALLEN IN EINER ABGASLEITUNG EINES VERBRENNUNGSMOTORS MIT EINEM SCR-KATALYSATOR

METHOD FOR CONTROLLING THE QUANTITY OF UREA CRYSTALS PRESENT IN AN EXHAUST LINE OF AN INTERNAL COMBUSTION ENGINE COMPRISING AN SCR CATALYTIC CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2016 FR 1657458**

(43) Date de publication de la demande:
**05.06.2019 Bulletin 2019/23**

(73) Titulaire: **Renault S.A.S.**
**92100 Boulogne-Billancourt (FR)**

(72) Inventeurs:
• **SELLAMI, Ali**
**75012 Paris (FR)**
• **PANHARD, Thibault**
**75013 Paris (FR)**

(56) Documents cités:
DE-A1-102009 008 165  FR-A1- 2 985 770
GB-A- 2 448 993  US-A1- 2014 017 794

EP 3 491 222 B1

**Description**

L'invention concerne le domaine du post-traitement des gaz d'échappement d'un moteur de véhicule automobile.

L'invention concerne plus particulièrement un procédé de régulation de la quantité de cristaux d'urée présents dans une ligne d'échappement d'un moteur à combustion interne comprenant un catalyseur de réduction catalytique sélective d'oxydes d'azotes (NOx), dit SCR (pour « Selective Catalytic Reduction »), au moyen d'un agent réducteur, généralement de l'Adblue®.

L'invention concerne également un groupe motopropulseur de véhicule automobile, comportant un moteur à combustion interne, une ligne d'échappement des gaz émis par le moteur qui comprend un filtre à particules, un catalyseur de réduction catalytique sélective d'oxydes d'azotes (NOx), dit SCR, au moyen d'un agent réducteur, et une unité de commande électronique qui met en œuvre de manière automatique le procédé de régulation.

Enfin, l'invention concerne un véhicule automobile qui comprend le groupe motopropulseur.

Les moteurs à combustion interne génèrent principalement des oxydes d'azote (NOx, principalement NO et $NO_2$), du monoxyde de carbone (CO), des hydrocarbures (HC) et des particules.

Les systèmes de post-traitement des gaz d'échappement disposés dans les lignes d'échappement des moteurs sont de plus en plus complexes afin de répondre à la baisse des seuils admis pour les émissions de gaz polluants des véhicules automobiles.

Les législations sur les émissions polluantes des véhicules automobiles, y compris les poids lourds, prévoient ainsi une diminution des rejets d'oxydes d'azote ($NO_x$) dans l'atmosphère. Pour atteindre cet objectif, on connaît un procédé de dépollution par réduction catalytique sélective SCR qui permet la réduction des oxydes d'azote par injection d'un agent, généralement une solution d'urée (Adblue®), dans la ligne d'échappement. Cet agent se décompose ensuite pour donner un agent réducteur, généralement de l'ammoniac, qui est stocké dans le ou les pains du catalyseur. Ces pains catalytiques permettent de réduire les NOx au moyen de l'agent réducteur stocké et de les transformer en diazote et en eau.

Cette technique est notamment utilisée pour satisfaire aux normes européennes d'émissions de rejets polluants, en particulier la norme Euro 6D-Temp, plus particulièrement pour les moteurs diesel.

D'un point de vue catalytique, les pains catalytiques sont efficaces à partir d'une température de 140/150°C sous réserve d'avoir de l'agent réducteur (ammoniac) stocké dans les pains.

En parallèle, l'injection de l'agent (solution d'urée) ne peut être active sans risque qu'à partir d'une température de 180/200°C pour éviter des problèmes de cristallisation de l'urée dans la ligne d'échappement.

En effet, à faible température, l'injection de la solution d'urée peut provoquer des obturations de la ligne d'échappement dues à la présence de ces cristaux.

Cependant, afin d'augmenter le traitement des NOx, il peut être intéressant d'injecter la solution d'urée à une température inférieure à la température de cristallisation (c'est-à-dire inférieure à une température de 180/200°C), en prenant un risque limité d'obturation de la ligne d'échappement par les cristaux d'urée.

Dans ce cas, afin d'appréhender au mieux ce risque, il est important d'estimer de manière précise la quantité d'urée cristallisée dans la ligne d'échappement.

Ainsi, une sous-estimation de la quantité de cristaux d'urée générée engendre un niveau de cristallisation trop élevé dans la ligne d'échappement qui peut conduire à une modification de l'arrosage de la ligne d'échappement voire à son obturation.

Egalement, une surestimation de la quantité de cristaux d'urée générée peut engendrer une surconsommation de carburant, de la dilution et une baisse de traitement des NOx.

Le document FR 2 985 770 divulgue un procédé qui permet d'éliminer les cristaux d'urée accumulés grâce à une régénération du filtre à particules en amont du catalyseur SCR sur la ligne d'échappement. La régénération du filtre à particules entraîne une augmentation de la température dans le catalyseur d'échappement et la ligne d'échappement ce qui a pour effet de sublimer les cristaux d'urée conduisant à leur élimination. Plus précisément ces cristaux d'urée sont sublimés et transformés en ammoniac qui se retrouve adsorbé dans le ou les pains catalytiques du catalyseur SCR.

Dans ce document, un modèle estime la masse de cristaux, puis la régénération est lancée lorsque la masse atteint un seuil prédéterminé.

Ce modèle est notamment basé sur un calcul par rapport à la température du moteur et de la ligne d'échappement, du débit des gaz d'échappement et du débit d'urée injecté, de la température extérieure et de la vitesse du véhicule.

Néanmoins après la régénération, la masse de cristaux continue d'être estimée par le même modèle sans recalibrage en fonction des enseignements que l'on pourrait tirer de la régénération.

Ainsi, si le modèle continue de sous-estimer de manière continue l'accumulation de cristaux d'urée, on risque d'injecter de l'urée dans des conditions où la masse de cristaux est en réalité trop importante à partir d'un certain moment précédant la régénération et jusqu'à ce que la régénération soit effectuée.

A l'inverse, si le modèle surestime la quantité de cristaux d'urée, la régénération est lancée trop tôt par rapport à la quantité de cristaux d'urée.

Le document GB 2 448 993 A divulgue un procédé comprenant le chauffage d'un catalyseur SCR dans une ligne d'échappement lorsque la quantité de cristaux d'urée accumulée dans le catalyseur SCR estimée à partir des mesures de NOx en amont et en aval du catalyseur dépasse un seuil prédéterminé.

L'invention se propose donc de résoudre ce problème. En particulier, la présente invention vise à évaluer le modèle à chaque régénération et à adapter le modèle en fonction des résultats d'évaluation obtenus.

Ceci permet d'autoriser les injections d'urée sans risque pendant toute la phase qui suit la régénération du filtre à particules et jusqu'à la régénération suivante (cas où le modèle sous-estimait la masse de cristaux), ou à prolonger la durée jusqu'à la régénération suivante (cas où le modèle surestimait la masse de cristaux).

Ainsi, un objet de la présente invention est un procédé de régulation de la quantité de cristaux d'urée présents dans une ligne d'échappement des gaz d'un moteur de véhicule automobile comprenant un catalyseur de réduction catalytique sélective d'oxydes d'azotes (NOx), dit SCR, au moyen d'un agent réducteur, ledit procédé selon la revendication 1 comprenant les étapes suivantes :

i) une étape de chauffage de la ligne d'échappement à une température suffisante pour sublimer les cristaux d'urée, l'étape de chauffage étant déclenchée périodiquement selon le résultat obtenu à partir d'un modèle de calcul, ledit modèle de calcul étant destiné à estimer, à l'instant courant t, la quantité de cristaux d'urée $MC_t$ présents dans la ligne d'échappement,

au cours de cette étape de chauffage, la mesure de la quantité d'oxydes d'azotes et/ou de la quantité d'agent réducteur en entrée et en sortie du catalyseur SCR sont effectuées, puis

ii) une étape de calcul de la quantité de cristaux d'urée $MC_m$ présents dans la ligne d'échappement à partir des mesures effectuées à l'étape i, puis,

iii) une étape d'ajustement dudit modèle de calcul au moyen de la quantité de cristaux d'urée calculée à l'étape ii).

Selon un mode de mise en œuvre du procédé de régulation selon l'invention, l'étape de chauffage de la ligne d'échappement est déclenchée à un instant T0 dès que ledit modèle de calcul estime une quantité de cristaux d'urée $MC_{t0}$ supérieur au seuil prédéterminé $MC_{rg}$.

Selon un mode de mise en œuvre du procédé de régulation selon l'invention, l'étape de chauffage de la ligne d'échappement est réalisée au moyen d'une régénération d'un filtre à particules, ledit filtre à particules étant situé sur la ligne d'échappement en amont du catalyseur SCR.

Selon un mode de mise en œuvre du procédé de régulation selon l'invention, l'étape i) de chauffage est précédée d'une étape de vidange du catalyseur SCR, ladite étape de vidange consistant à éliminer l'agent réducteur (l'ammoniac) présent dans le catalyseur SCR.

Selon ce mode de mise en œuvre du procédé de régulation selon l'invention, l'étape de vidange du catalyseur SCR est suivie d'une étape d'évaluation de l'efficacité de traitement du catalyseur SCR au moyen de la mesure de la quantité d'oxydes d'azote en entrée et en sortie du catalyseur SCR, de manière à s'assurer que la vidange est bien complète.

Selon un mode de mise en œuvre du procédé de régulation selon l'invention, l'étape de calcul ii) comprend l'évaluation de la quantité d'oxydes d'azote traitée $NOx_{traité}$ correspondant à la différence entre la quantité mesurée d'oxydes d'azotes et/ou de la quantité d'agent réducteur en sortie du catalyseur SCR, et la quantité mesurée d'oxydes d'azotes et/ou d'agent réducteur en entrée du catalyseur SCR.

La quantité (c'est-à-dire : la masse) d'oxydes d'azote et/ou d'agent réducteur à la sortie (respectivement : à l'entrée) du catalyseur peut être calculée comme une intégrale temporelle du débit des gaz (mesuré par un débitmètre) et de la concentration en oxydes d'azote et/ou en agent réducteur à la sortie (respectivement : à l'entrée) du catalyseur mesurée par un capteur d'oxydes d'azote aval (respectivement : amont) monté à la sortie (respectivement : à l'entrée) du catalyseur SCR.

Il est connu en soi que de tels capteurs d'oxydes d'azote sont sensibles non seulement aux oxydes d'azote, mais aussi à l'ammoniac. La concentration mesurée par un tel capteur est donc soit une concentration d'oxydes d'azote, soit une concentration d'ammoniac, soit la somme d'une concentration d'oxydes d'azote et d'ammoniac, selon que l'une et/ou l'autre des espèces sont présentes.

Selon ce mode de mise en œuvre du procédé de régulation selon l'invention, l'étape iii) d'ajustement dudit modèle de calcul dépend de l'évaluation de la quantité d'oxydes d'azote traitée $NOx_{traité}$.

L'invention a également pour objet un groupe motopropulseur de véhicule automobile selon la revendication 8, comportant un moteur à combustion interne, une ligne d'échappement des gaz émis par le moteur qui comprend un filtre à particules, un catalyseur de réduction catalytique sélective d'oxydes d'azotes (NOx), dit SCR, au moyen d'un agent réducteur et comprend une unité de commande électronique qui met en œuvre de manière automatique le procédé de régulation ci-dessus.

Enfin, un objet de la présente invention est un véhicule automobile selon la revendication 9 qui comprend le groupe motopropulseur ci-dessus.

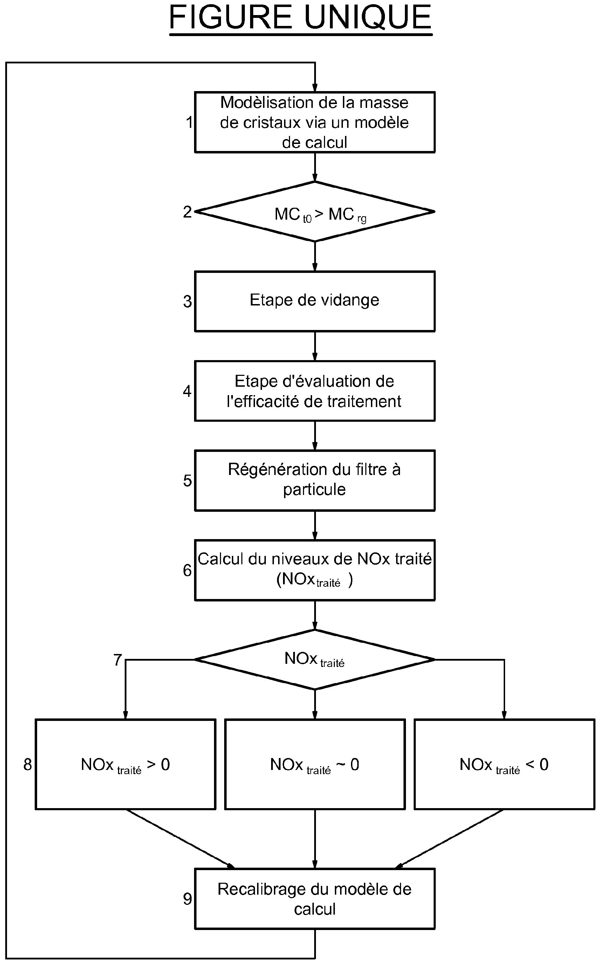

D'autres avantages et caractéristiques de l'invention apparaîtront à la lecture de la description détaillée d'un mode de réalisation de l'invention, qui est un exemple non limitatif, illustré sur la figure unique annexée qui représente un mode de réalisation particulier du procédé de régulation selon l'invention.

De manière préférée, l'agent réducteur défini dans le procédé selon l'invention est l'ammoniac.

La figure unique annexée décrit un mode de réalisation du procédé de régulation selon l'invention.

Un modèle de calcul évalue à l'instant courant t la quantité de cristaux d'urée $MC_t$ présents dans la ligne d'échappement (étape 1 de la figure unique).

Ce modèle a été préalablement programmé en fonction de paramètres tels que la température du moteur et de la ligne d'échappement, du débit des gaz d'échappement et du débit d'urée injecté, de la température extérieure et de la vitesse du véhicule.

Ce modèle est itératif, c'est-à-dire qu'il ajoute ou retire à chaque calcul une masse de cristaux d'urée à la masse cristallisée totale calculée à l'étape précédente.

Par exemple, si la température de la ligne d'échappement est inférieure à une température prédéterminée, l'urée se transforme en partie seulement en agent réducteur tel que l'ammoniac.

Par conséquent, la quantité de cristaux d'urée va avoir tendance à augmenter dans la ligne d'échappement, notamment dans le catalyseur SCR de la ligne d'échappement. Dans ce cas, le modèle de calcul va ajouter une certaine quantité de cristaux d'urée à la masse cristallisée totale déjà calculée.

A l'inverse, si la température de la ligne d'échappement est par exemple supérieure à la température prédéterminée, la totalité de l'urée injectée dans la ligne d'échappement se transforme en agent réducteur tel que l'ammoniac.

Cette température permet également aux cristaux d'urée déjà présents dans la ligne d'échappement de se transformer en agent réducteur.

Dans ce cas, le modèle de calcul va retirer une certaine quantité de cristaux d'urée à la masse cristallisée totale déjà calculée.

A un instant T0, le modèle de calcul estime une quantité de cristaux d'urée $MC_{t0}$ supérieure à un seuil prédéterminé $MC_{rg}$ (étape 2 dans la figure unique).

L'étape de chauffage i) de la ligne d'échappement à une température suffisante pour sublimer les cristaux d'urée démarre alors.

En premier lieu dans le mode de réalisation du procédé de régulation selon l'invention et avant l'étape de chauffage i), une étape de vidange du catalyseur SCR s'enclenche.

Cette étape consiste à éliminer totalement l'agent réducteur présent dans le catalyseur SCR (étape 3 dans la figure unique).

Pour ce faire, l'injection d'urée est coupée ce qui permet de consommer progressivement le stock d'agent réducteur contenu dans le catalyseur SCR grâce aux oxydes d'azote émis dans les gaz d'échappement du moteur.

Il est également possible pour accélérer cette étape de couper le système de recirculation des gaz d'échappement (système EGR en anglais pour « Exhaust Gas Recirculation »). Cela permet d'augmenter les émissions de NOx dans les gaz d'échappement et donc d'éliminer plus rapidement l'agent réducteur présent dans le catalyseur SCR, cet agent étant consommé en plus grandes quantités.

Une fois l'étape de vidange effectuée dans le mode de réalisation du procédé de régulation selon l'invention, une étape d'évaluation de l'efficacité de traitement du catalyseur SCR au moyen de la mesure de la quantité d'oxydes d'azote en entrée et en sortie du catalyseur SCR est effectuée (étape 4 dans la figure unique). Cette évaluation de l'efficacité permet de s'assurer que la vidange a bien été complète. En effet, l'efficacité de traitement dépend notamment de la quantité d'agent réducteur présente dans le catalyseur. On s'assure ici que l'efficacité est nulle, correspondant à l'absence totale d'agent réducteur dans le catalyseur SCR et à l'absence de toute injection d'urée en amont du catalyseur SCR.

Cette étape d'évaluation peut être ensuite suivie de l'étape de chauffage i) de la ligne d'échappement à une température suffisante pour sublimer les cristaux d'urée.

L'étape de chauffage peut être réalisée au moyen d'une régénération du filtre à particules situé sur la ligne d'échappement en amont du catalyseur SCR (étape 5).

Cette étape va permettre de sublimer les cristaux d'urée présents dans la ligne d'échappement, notamment dans le catalyseur SCR. Au cours de cette opération de chauffage, les cristaux d'urée sont transformés en ammoniac, qui se stocke dans le ou les pains catalytiques du catalyseur SCR. Toutefois, dans le cas où la quantité d'ammoniac résultant de la sublimation des cristaux d'urée dépasse une valeur de capacité de stockage maximal du catalyseur, l'excédent est rejeté à la sortie du catalyseur SCR.

On comprend de ce qui précède qu'à partir du lancement et au cours de l'étape de chauffage, étant donné que l'injection d'urée dans la ligne d'échappement a été coupée, la seule source possible d'agent réducteur pour le traitement des oxydes d'azote dans le catalyseur SCR est constituée par l'ammoniac provenant de la sublimation des cristaux d'urée présents dans la ligne d'échappement, notamment dans le catalyseur SCR.

Par conséquent, une mesure de la quantité d'oxydes d'azotes et/ou de la quantité d'agent réducteur en entrée et en sortie du catalyseur SCR en même temps que l'étape de chauffage permet d'évaluer la quantité de cristaux d'urée présents dans la ligne d'échappement.

Ainsi, le procédé selon l'invention comprend ensuite une étape de calcul ii) de la quantité de cristaux d'urée $MC_m$ présents dans la ligne d'échappement à partir des mesures effectuées (étape 6 de la figure unique).

L'étape de calcul comprend en particulier l'évaluation de la quantité d'oxydes d'azote traitée $NOx_{traité}$ correspondant à la différence entre la quantité mesurée d'oxydes d'azotes et/ou d'agent réducteur en sortie du catalyseur SCR et la quantité mesurée d'oxydes d'azote et/ou d'agent réducteur en entrée du catalyseur SCR (étape 7 de la figure unique).

Ainsi, l'étape iii) d'ajustement (ou de recalibration) du modèle de calcul peut dépendre de l'évaluation de la quantité d'oxydes d'azote traitée $NOx_{traité}$ (étape 9 de la figure unique).

Dans le détail, trois cas peuvent se présenter (étape 8 de la figure unique) :

Cas 1 : si la quantité d'oxydes d'azote traitée $NOx_{traité}$ est supérieure à 0

Plus précisément : si la quantité d'oxydes d'azote et/ou d'ammoniac sortant du catalyseur SCR est inférieure à la quantité entrante.

Cela signifie que des oxydes d'azote ont été traités, et qu'il y a une masse d'ammoniac, issue de cristaux d'urée sublimés, dans le catalyseur SCR.

La masse d'agent réducteur utilisée pour traiter la quantité d'oxydes d'azote traitée $NOx_{traité}$ est calculée.

Pour cela, il est possible de se baser classiquement sur un modèle d'efficacité de traitement déjà utilisé dans la stratégie habituelle de dosage de l'urée. Plus précisément, l'efficacité de traitement est une fonction cartographiée d'un ensemble de paramètres comprenant au moins un débit d'agent réducteur injecté dans le catalyseur SCR, d'un stock d'agent réducteur déjà présent dans le catalyseur SCR, et d'autres paramètres tels que le débit traversant des gaz et la température du catalyseur SCR. Inversement ici, à partir de la connaissance à chaque instant du débit des gaz, de la température, de l'efficacité qui est calculée à partir des quantités entrante et sortante d'oxydes d'azote et/ou d'agent réducteur, et en faisant l'hypothèse d'un stock d'agent réducteur nul, on remonte à chaque instant à l'équivalent du débit d'urée nécessaire pour traiter la quantité d'oxydes d'azote considérée, puis par intégration temporelle à la masse totale d'agent réducteur.

Cette masse d'agent réducteur utilisée est ensuite comparée à la masse seuil qui a servi à lancer la régénération.

Pour ce calcul, on considère que l'ensemble de l'agent réducteur issu de la sublimation des cristaux est consommé par les pains du catalyseur SCR.

Le rapport des deux masses (masse d'agent réducteur modélisée par le modèle de calcul et masse d'agent réducteur calculée à partir des mesures de NOx traité) permet de corriger la vitesse de formation des cristaux. Ainsi, le modèle de calcul sera revu à la surestimation si le rapport est supérieur à 1 ou à la sous-estimation si le rapport est inférieur à 1.

Si le rapport est environ égal à 1 alors le modèle de calcul est optimal.

Le procédé reprend ensuite au début et le modèle de calcul recommence à évaluer à l'instant courant t la quantité de cristaux d'urée $MC_t$ présents dans le catalyseur SCR (étape 1 de la figure unique).

L'injection d'urée redémarre également ainsi que le système de recirculation des gaz d'échappement (système EGR) s'il a été coupé.

Cas 2 : si la quantité d'oxydes d'azote traitée $NOx_{traité}$ est sensiblement égale à 0

Cela signifie que la masse de cristaux d'urée mesurée est nulle. Il n'y a pas de cristaux d'urée dans le catalyseur SCR.

Ainsi, l'étape de chauffage n'a pas fait apparaître d'agent réducteur. Le modèle de calcul surestime fortement la quantité de cristaux d'urée.

Par conséquent, une correction forfaitaire adéquate de la vitesse de formation des cristaux d'urée est appliquée au modèle de calcul.

Le procédé reprend ensuite au début et le modèle de calcul recommence à évaluer à l'instant t la quantité de cristaux d'urée $MC_t$ présents dans le catalyseur SCR (étape 1 de la figure unique).

L'injection d'urée redémarre également ainsi que le système de recirculation des gaz d'échappement (système EGR) s'il a été coupé.

Cas 3 : si la quantité d'oxydes d'azote traitée NOx$_{traité}$ est inférieure à 0

Plus précisément, en réalité : si la quantité d'oxydes d'azote et/ou d'ammoniac sortant du catalyseur SCR est supérieure à la quantité entrante.

Cela signifie qu'une quantité très importante de cristaux d'urée était présente dans la ligne d'échappement.

En effet, étant donné que les capteurs d'oxydes d'azote en amont et en aval du catalyseur SCR détectent tout autant la quantité d'agent réducteur que la quantité de NOx, cela signifie que le catalyseur SCR n'est pas capable d'adsorber la totalité de l'agent réducteur issue de la sublimation des cristaux d'urée.

Ainsi, l'agent réducteur formé lors de la sublimation des cristaux d'urée est en large excès, ce qui permet de traiter une grande partie des oxydes d'azote, l'excédent étant directement évacué par la ligne d'échappement sans être absorbé par les pains du catalyseur SCR.

On dit alors que le catalyseur SCR « fuit ».

On réalise ainsi un bilan de masse entre la masse d'agent réducteur stocké dans les pains du catalyseur SCR MNH3$_{ASC}$, la masse d'agent réducteur consommée pour traiter les NOx entrant MNH3$_{traitNOx}$ et la masse de NOx traitée pendant l'étape de chauffage MNOx$_{calculé}$.

La masse d'agent réducteur stocké MNH3$_{ASC}$ dépend des caractéristiques des pains du catalyseur SCR, des conditions de température du catalyseur SCR et du débit des gaz d'échappement.

La masse consommée MNH3$_{traitNOx}$ est estimée via le modèle d'efficacité.

La masse traitée MNOx$_{calculé}$ est calculée via la mesure de la quantité d'oxydes d'azote et/ou de la quantité d'agent réducteur en entrée et en sortie du catalyseur SCR.

Ce bilan de masse permet de calculer la masse de cristaux totale présente dans le catalyseur SCR MNH3$_{cris}$ par la formule suivante :

$$MNOx_{calculé} = MNH3_{ASC} + MNH3_{traitNOx} + MNH3_{cris}$$

Le modèle de calcul est ensuite réévalué sur la base de la masse de cristaux totale MNH3$_{cris}$ calculée ci-dessus.

Plus précisément, le rapport des deux masses (masse d'agent réducteur modélisée par le modèle de calcul et masse d'agent réducteur calculée à partir des mesures de NOx traité) permet de corriger la vitesse de formation des cristaux, comme pour le cas 1.

Le procédé reprend ensuite au début et le modèle de calcul recommence à évaluer à l'instant courant t la quantité de cristaux d'urée MC$_t$ présents dans le catalyseur SCR (étape 1 de la figure unique).

L'injection d'urée redémarre également ainsi que le système de recirculation des gaz d'échappement (système EGR) s'il a été coupé.

**Revendications**

1. Procédé de régulation de la quantité de cristaux d'urée présents dans une ligne d'échappement comprenant un catalyseur de réduction catalytique sélective d'oxydes d'azote (NOx) au moyen d'un agent réducteur, dit SCR, ledit procédé comprenant les étapes suivantes :

    i) une étape de chauffage de la ligne d'échappement à une température suffisante pour sublimer les cristaux d'urée, l'étape de chauffage étant déclenchée périodiquement selon le résultat obtenu à partir d'un modèle de calcul, ledit modèle de calcul étant destiné à estimer, à l'instant courant (t), la quantité de cristaux d'urée (MC$_t$) présents dans la ligne d'échappement,
    au cours de cette étape de chauffage, la mesure de la quantité d'oxydes d'azote et/ou de la quantité d'agent réducteur en entrée et en sortie du catalyseur sont effectuées, puis
    ii) une étape de calcul de la quantité de cristaux d'urée (MC$_m$) présents dans la ligne d'échappement à partir des mesures effectuées à l'étape i), puis,
    iii) une étape d'ajustement dudit modèle de calcul au moyen de la quantité de cristaux d'urée calculée à l'étape ii).

2. Procédé de régulation selon la revendication 1, **caractérisé en ce que** ladite étape de chauffage est déclenchée à un instant T0 dès que ledit modèle de calcul estime une quantité de cristaux d'urée (MC$_{t0}$) supérieure à un seuil prédéterminé (MC$_{rg}$).

3. Procédé de régulation selon la revendication 1 ou 2, **caractérisé en ce que** l'étape de chauffage est réalisée au moyen d'une régénération d'un filtre à particules, ledit filtre à particules étant situé sur la ligne d'échappement en amont du catalyseur.

4. Procédé de régulation selon l'une quelconque des revendications précédentes, **caractérisé en ce que** l'étape i) de chauffage est précédée d'une étape de vidange du catalyseur, ladite étape de vidange consistant à éliminer l'agent réducteur présent dans le catalyseur.

5. Procédé de régulation selon la revendication 4, **caractérisé en ce que** l'étape de vidange du catalyseur est suivie d'une étape d'évaluation de l'efficacité de traitement du catalyseur SCR au moyen de la mesure de la quantité d'oxydes d'azote en entrée et en sortie du catalyseur.

6. Procédé de régulation selon l'une quelconque des revendications précédentes, **caractérisé en ce que** l'étape de calcul comprend l'évaluation de la quantité d'oxydes d'azote traitée ($NOx_{traité}$) correspondant à la différence entre la quantité mesurée d'oxydes d'azote et/ou la quantité d'agent réducteur en sortie du catalyseur, et de la quantité mesurée d'oxydes d'azote et/ou d'agent réducteur en entrée du catalyseur.

7. Procédé de régulation selon la revendication 6, **caractérisé en ce que** l'étape iii) d'ajustement dudit modèle de calcul dépend de l'évaluation de la quantité d'oxydes d'azote traitée ($NOx_{traité}$).

8. Groupe motopropulseur de véhicule automobile, comportant un moteur à combustion interne, une ligne d'échappement des gaz émis par le moteur qui comprend un filtre à particules, un catalyseur de réduction catalytique sélective d'oxydes d'azote (NOx), dit SCR, au moyen d'un agent réducteur, **caractérisé en ce qu'**il comprend une unité de commande électronique configurée pour mettre en œuvre de manière automatique le procédé de régulation selon l'une quelconque des revendications précédentes.

9. Véhicule automobile **caractérisé en ce qu'**il comprend un groupe motopropulseur selon la revendication 8.


**Patentansprüche**

1. Verfahren zur Regelung der Menge von Harnstoffkristallen in einer Abgasleitung, die einen Katalysator zur selektiven katalytischen Reduktion von Stickoxiden (NOx) mittels eines Reduktionsmittels, SCR-Katalysator genannt, umfasst, wobei das Verfahren die folgenden Schritte umfasst:

i) einen Schritt der Erwärmung der Abgasleitung auf eine Temperatur, die ausreichend ist, um die Harnstoffkristalle zu sublimieren, wobei der Schritt der Erwärmung periodisch je nach dem aus einem Berechnungsmodell erhaltenen Ergebnis ausgelöst wird, wobei das Berechnungsmodell dazu bestimmt ist, zum aktuellen Zeitpunkt (t) die Menge von Harnstoffkristallen ($MC_t$) zu schätzen, die in der Abgasleitung vorhanden sind, wobei in diesem Schritt der Erwärmung die Messung der Menge von Stickoxiden und/oder der Menge von Reduktionsmittel am Eingang und am Ausgang des Katalysators durchgeführt wird, anschließend

ii) einen Schritt der Berechnung der Menge von Harnstoffkristallen ($MC_m$), die in der Abgasleitung vorhanden sind, anhand der in Schritt i) durchgeführten Messungen, anschließend

iii) einen Schritt der Anpassung des Berechnungsmodells mittels der in Schritt ii) berechneten Menge von Harnstoffkristallen.

2. Verfahren zur Regelung nach Anspruch 1, **dadurch gekennzeichnet, dass** der Schritt der Erwärmung zu einem Zeitpunkt T0 ausgelöst wird, sobald das Berechnungsmodell eine Menge von Harnstoffkristallen ($MC_{to}$) schätzt, die größer als ein vorbestimmter Schwellenwert ($MC_{rg}$) ist.

3. Verfahren zur Regelung nach Anspruch 1 oder 2, **dadurch gekennzeichnet, dass** der Schritt der Erwärmung mittels einer Regeneration des Partikelfilters durchgeführt wird, wobei sich das Partikelfilter in der Abgasleitung stromaufwärts des Katalysators befindet.

4. Verfahren zur Regelung nach einem der vorhergehenden Ansprüche, **dadurch gekennzeichnet, dass** dem Schritt i) der Erwärmung ein Schritt der Entleerung des Katalysators vorausgeht, wobei der Schritt der Entleerung darin besteht, das im Katalysator vorhandene Reduktionsmittel zu entfernen.

5. Verfahren zur Regelung nach Anspruch 4, **dadurch gekennzeichnet, dass** auf den Schritt der Entleerung des Katalysators ein Schritt der Bewertung der Wirksamkeit der Behandlung des SCR-Katalysators mittels der Messung der Menge von Stickoxiden am Eingang und am Ausgang des Katalysators folgt.

**6.** Verfahren zur Regelung nach einem der vorhergehenden Ansprüche, **dadurch gekennzeichnet, dass** der Schritt der Berechnung die Ermittlung der behandelten Menge von Stickoxiden (NOx$_{behandeit}$) umfasst, welche der Differenz zwischen der gemessenen Menge von Stickoxiden und/oder der Menge von Reduktionsmittel am Ausgang des Katalysators und der gemessenen Menge von Stickoxiden und/oder von Reduktionsmittel am Eingang des Katalysators entspricht.

**7.** Verfahren zur Regelung nach Anspruch 6, **dadurch gekennzeichnet, dass** der Schritt iii) der Anpassung des Berechnungsmodells von der Ermittlung der behandelten Menge von Stickoxiden (NOx$_{behandeit}$) abhängt.

**8.** Antriebsstrang eines Kraftfahrzeugs, welcher eine Brennkraftmaschine aufweist, sowie eine Abgasleitung für die Abgase des Motors, welche ein Partikelfilter und einen Katalysator zur selektiven katalytischen Reduktion von Stickoxiden (NOx) mittels eines Reduktionsmittels, SCR-Katalysator genannt, umfasst, **dadurch gekennzeichnet, dass** er eine elektronische Steuereinheit umfasst, die dafür ausgelegt ist, automatisch das Verfahren zur Regelung nach einem der vorhergehenden Ansprüche durchzuführen.

**9.** Kraftfahrzeug, **dadurch gekennzeichnet, dass** es einen Antriebsstrang nach Anspruch 8 umfasst.

**Claims**

**1.** Process for controlling the amount of urea crystals present in an exhaust line comprising a catalytic converter for the selective catalytic reduction of nitrogen oxides (NOx) by means of a reducing agent, referred to as SCR, said process comprising the following steps:

i) a step of heating the exhaust line to a temperature sufficient to sublimate the urea crystals, the heating step being periodically triggered on the basis of the result obtained from a computational model, said computational model being intended to estimate, at the current instant (t), the amount of urea crystals (MCt) present in the exhaust line,
during this heating step, the amount of nitrogen oxides and/or the amount of reducing agent at the inlet and at the outlet of the catalytic converter are measured, then
ii) a step of calculating the amount of urea crystals (MC$_m$) present in the exhaust line from the measurements carried out in step i), then
iii) a step of adjusting said computational model by means of the amount of urea crystals calculated in step ii).

**2.** Process according to Claim 1, **characterized in that** said heating step is triggered at an instant T0 as soon as said computational model estimates an amount of urea crystals (MCto) above a predetermined threshold (MC$_{rg}$).

**3.** Control process according to Claim 1 or 2, **characterized in that** the heating step is carried out by means of a regeneration of a particle filter, said particle filter being located on the exhaust line upstream of the catalytic converter.

**4.** Control process according to any one of the preceding claims, **characterized in that** the heating step i) is preceded by a step of emptying the catalytic converter, said emptying step consisting in removing the reducing agent present in the catalytic converter.

**5.** Control process according to Claim 4, **characterized in that** the step of emptying the catalytic converter is followed by a step of evaluating the treatment efficiency of the SCR catalytic converter by means of measuring the amount of nitrogen oxides at the inlet and at the outlet of the catalytic converter.

**6.** Control process according to any one of the preceding claims, **characterized in that** the calculation step comprises evaluating the amount of nitrogen oxides treated (NOx$_{treated}$) corresponding to the difference between the measured amount of nitrogen oxides and/or the amount of reducing agent at the outlet of the catalytic converter, and the measured amount of nitrogen oxides and/or of reducing agent at the inlet of the catalytic converter.

**7.** Control process according to Claim 6, **characterized in that** step iii) of adjusting said computational model depends on the evaluation of the amount of nitrogen oxides treated (NOX$_{treated}$).

8. Motor vehicle powertrain, comprising an internal combustion engine, an exhaust line for the gases emitted by the engine which comprises a particle filter, a catalytic converter for the selective catalytic reduction of nitrogen oxides (NOx), referred to as SCR, by means of a reducing agent, **characterized in that** it comprises an electronic control unit configured to automatically implement the control process according to any one of the preceding claims.

9. Motor vehicle, **characterized in that** it comprises a powertrain according to Claim 8.

# FIGURE UNIQUE

```
          ┌─────────────────────────────┐
          │  Modèlisation de la masse   │
        1 │  de cristaux via un modèle  │
          │        de calcul            │
          └─────────────────────────────┘
                        │
                        ▼
        2   ◇  MC_{t0} > MC_{rg}  ◇
                        │
                        ▼
          ┌─────────────────────────────┐
        3 │      Etape de vidange       │
          └─────────────────────────────┘
                        │
                        ▼
          ┌─────────────────────────────┐
        4 │   Etape d'évaluation de     │
          │  l'efficacité de traitement │
          └─────────────────────────────┘
                        │
                        ▼
          ┌─────────────────────────────┐
        5 │   Régénération du filtre à  │
          │         particule           │
          └─────────────────────────────┘
                        │
                        ▼
          ┌─────────────────────────────┐
        6 │ Calcul du niveaux de NOx traité │
          │       (NOx_{traité} )       │
          └─────────────────────────────┘
                        │
                        ▼
        7     ◇   NOx_{traité}   ◇
```

$MC_{t0} > MC_{rg}$

$NOx_{traité}$

8    $NOx_{traité} > 0$     $NOx_{traité} \sim 0$     $NOx_{traité} < 0$

9    Recalibrage du modèle de calcul

**EP 3 491 222 B1**

**RÉFÉRENCES CITÉES DANS LA DESCRIPTION**

**Documents brevets cités dans la description**

- FR 2985770
- GB 2448993 A